Europäisches Patentamt

European Patent Office

Office européen des brevets

(19)

(11) Veröffentlichungsnummer: **0 078 520**
**B1**

(12) # EUROPÄISCHE PATENTSCHRIFT

(45) Veröffentlichungstag der Patentschrift:
**19.02.86**

(51) Int. Cl.⁴: **B 60 Q 7/00**

(21) Anmeldenummer: **82110015.3**

(22) Anmeldetag: **29.10.82**

(54) **Im Kraftfahrzeug mitnehmbares Warndreieck.**

(30) Priorität: **03.11.81 DE 3143509**

(43) Veröffentlichungstag der Anmeldung:
**11.05.83 Patentblatt 83/19**

(45) Bekanntmachung des Hinweises auf die Patenterteilung:
**19.02.86 Patentblatt 86/8**

(84) Benannte Vertragsstaaten:
**FR GB IT SE**

(56) Entgegenhaltungen:
**DE - U - 1 961 935**
**DE - U - 1 976 959**
**DE - U - 7 037 021**
**FR - A - 2 272 864**
**FR - A - 2 280 159**

(73) Patentinhaber: **Burger Söhne GmbH. + Co.,**
**Jahnstrasse 33, D-7032 Sindelfingen (DE)**

(72) Erfinder: **Burger, Klaus, Wilheim-Hörmann-Strasse 44,**
**D-7032 Sindelfingen (DE)**
Erfinder: **Schneider, Fritz, Obere Talstrasse 5,**
**D-6960 Osterburken (DE)**

(74) Vertreter: **Schiering, Hans, Dipl.-Ing. et al,**
**Patentantwälte Dr.-Ing. Rudolf Schiering Dipl.-Ing. Hans**
**Schiering Westerwaldweg 4, D-7030 Böblingen (DE)**

## Beschreibung

Die Erfindung bezieht sich auf ein im Kraftfahrzeug mitnehmbares Warndreieck für die Sicherung des Strassenverkehrs gegenüber haltenden oder liegengebliebenen Fahrzeugen, das in den Endbereichen einer seiner drei gleich langen Seiten mit der Spitze nach oben ragend auf einem Flachstab befestigt ist, dessen Enden zu einem Standfusspaar nach unten abgewinkelt sind, und zu seiner Abstützung mit einem zweiten Flachstab mit zu einem Standfusspaar nach unten abgewinkelten Enden versehen ist, der am ersten Flachstab drehbar gelagert ist, in der Einschwenk-Endstellung unter dem ersten Flachstab Platz hat und in der durch einen Anschlag begrenzten Ausschwenk-Endstellung mit dem ersten Flachstab einen kreuzförmigen Ständer bildet.

Ein derartiges Warndreieck wird gewöhnlich in einiger Entfernung hinter einem haltenden oder liegengebliebenen Fahrzeug aufgestellt, um den nachfolgenden Strassenverkehr frühzeitig auf die Gefahrenstelle aufmerksam zu machen. Das Warndreieck muss dort eine beträchtliche Standfestigkeit besitzen, damit es nicht von Windstössen aus der Signalstellung herausgeschoben oder gar umgeworfen werden kann. Die dadurch bedingte Sperrigkeit des Warndreiecks lässt sich infolge der Einschwenkmöglichkeit für den zweiten Flachstab grösstenteils zurücknehmen, so dass die Mitnehmbarkeit des Warndreiecks im Kraftfahrzeug erleichtert wird.

Bei den bisher bekannten Warndreiecken der zuvor genannten Art (DE-V-70 37 021) wird die erforderliche grosse Standfestigkeit hauptsächlich durch ein hohes Eigengewicht gewährleistet, insbesondere durch das Eigengewicht der beiden Flachstäbe, deren Enden zu je einem Standfusspaar nach unten abgewinkelt sind. Es ist auch bekannt, auf die abgewinkelten Enden der beiden Flachstäbe Schuhe aus rutschhemmendem Material aufzustecken, die an der Unterseite elastische Ausformungen aufweisen. Diese Ausformungen sind so ausgestaltet und angeordnet, dass ein hohes Eigengewicht des Warndreiecks zum Erfassen der Bodenrauhigkeiten ausgenutzt werden kann. Ein hohes Eigengewicht des im Kraftfahrzeug mitnehmbaren Warndreiecks wird jedoch zunehmend fragwürdiger, seit zum Zwecke der Senkung des Kraftstoffbedarfs die Leichtbauweise im Kraftfahrzeugbau weitere Fortschritte gemacht hat.

Die beiden zur Bildung eines kreuzförmigen Ständers dienenden Flachstäbe der bekannten Warndreiecke sind dick, massiv und starr. Ein Durchbiegen erscheint bei ihnen nur im Falle einer zerstörerischen Überbeanspruchung möglich. Der die Ausschwenk-Endstellung des zweiten Flachstabes begrenzende Anschlag besteht aus einer nach oben abstehenden Nase des zweiten Flachstabes, für deren Einschwenk-Endstellung im ersten Flachstab eine ausreichend grosse Aussparung vorgesehen ist. Die Befestigung des Warndreiecks in den Endbereichen einer seiner drei gleich langen Seiten erfolgt über je einen auf den ersten Flachstab aufgesetzten Winkel, dessen horizontaler Schenkel dem Kopf einer Befestigungsschraube oder Befestigungsniete den erforderlichen Platz bietet. Letzteres bringt es mit sich, dass das Warndreieck weit ausserhalb der Ebene der Längsmittellinie des ersten Flachstabes vom ersten Flachstab aufragt und ein dementsprechendes Eigenkippmoment erhält, das ein Stehenbleiben bei voll eingeschwenktem zweiten Flachstab ausschliesst.

Der Erfindung liegt die Aufgabe zugrunde, für ein im Kraftfahrzeug mitnehmbares Warndreieck der eingangs angeführten Art eine bei grosser Standfestigkeit und grosser Signalkraft Eigengewicht und Herstellungskosten einsparende Bauform zu erzielen.

Diese Aufgabe wird erfindungsgemäss dadurch gelöst, dass die beiden Flachstäbe unstarr dünn und elastisch ausgebildet sind, die Hälften des ersten Flachstabs zwischen dem Schwenklager für den zweiten Flachstab und der jeweiligen Befestigungsstelle für das Warndreieck als Torsionsfedern eingerichtet sind und die Hälften des zweiten Flachstabes als vom Warndreieck breitseitig aufgenommenen Wind ausgeschwenkt in Standfuss-Andruckkraft umsetzende Blattfedern eingerichtet sind.

Damit geht das Eigengewicht des Warndreiecks ganz erheblich herunter, so dass die vom Eigengewicht herrührende Standfuss-Andruckkraft für sich allein die Standfestigkeit des Warndreiecks in Windstössen nicht mehr gewährleisten würde. Die fehlende Standfuss-Andruckkraft wird anderweitig und nur im eigentlichen Bedarfsfall durch windabhängiges Schrägstellen des Warndreiecks aufgebracht, wozu die beiden Flachstäbe die zusätzliche Funktion einer Rückstelleinrichtung erhalten haben. Die Rückstellkräfte der beiden Flachstäbe und die Standfuss-Andruckkraft nehmen mit der Windkraft zu und ab. Da die Windkraft fast immer kurzzeitig schwankt und der Grad der leichten Schrägstellung des Warndreiecks diesen Windkraftschwankungen folgt, ergibt sich zugleich eine gesteigerte Signalwirkung des Warndreiecks, insbesondere dann, wenn die vorgeschriebenen rückstrahlenden Teile des Warndreiecks in Funktion treten. Mit der Erfindung erzielte Vorteile bestehen aber insbesondere auch darin, dass sich die beträchtlichen Gewichtseinsparungen am Warndreieck und die Heranziehung der beiden Flachstäbe als Rückstelleinrichtung in einer Senkung der Herstellungskosten des Warndreiecks niederschlagen und ein Fallenlassen oder Anschlagen des leichteren Warndreiecks weniger zu Beschädigungen beispielsweise an einer Autokarosserie führt.

Aus dem Dokument FR-A-2 280 159 ist ein Warndreieck bekannt, bei dem der Signalteil und der Ständer durch ein elastisches Organ, vorzugsweise zwei an den Enden einer unteren Schenkelleiste angreifende elastische Lamellen, miteinander verbunden sind, so dass sich der Strömungswiderstand des Warndreiecks mit steigender Windkraft durch Neigen des Signalteils vermindert. Die ausschliesslich durch das windabhängige Schrägstellen maximal mögliche Gewichtseinsparung ist jedoch verhältnismässig bescheiden. Eine vorteilhafte Umsetzung der gegen den Erdboden gerichteten Andruckkomponente der Windkraft in eine besonders starke und plazierte Standfuss-Andruckkraft wurde in dem Dokument FR-A-2 280 159 nicht einmal angestrebt. Überdies unterscheidet sich davon der Gegenstand des Anspruchs 1 bereits gattungsmässig dadurch, dass von insgesamt zwei Flachstäben mit zu je einem Standfusspaar nach unten abgewinkelten Enden in der Ausschwenk-Endstellung ein kreuzförmiger Ständer gebildet wird.

Ein aufgrund der in den Unteransprüchen angegebenen Erfindungsausgestaltungen besonders bevorzugtes Ausführungsbeispiel der Erfindung ist in der Zeichnung dargestellt und wird im folgenden näher beschrieben. Es zeigt

Fig. 1 eine perspektivische Gesamtansicht des beschriebenen Warndreiecks,

Fig. 2 einen Schnitt entsprechend der Linie A–A in Fig. 1,

Fig. 3 einen Schnitt entsprechend der Linie B–B in Fig. 1,

Fig. 4 die sich ohne breitseitig aufgenommenen Wind einstellende Form des Warndreiecks,

Fig. 5 die sich mit breitseitig aufgenommenen Wind einstellende Form des Warndreiecks,

Fig. 6 die Unterseite eines Standfuss-Schuhs des beschriebenen Warndreiecks,

Fig. 7 die Schmalseitenansicht des unbelasteten Schuhs nach Fig. 6 und

Fig. 8 die Schmalseitenansicht des mit Windkraft belasteten Schuhs nach Fig. 6.

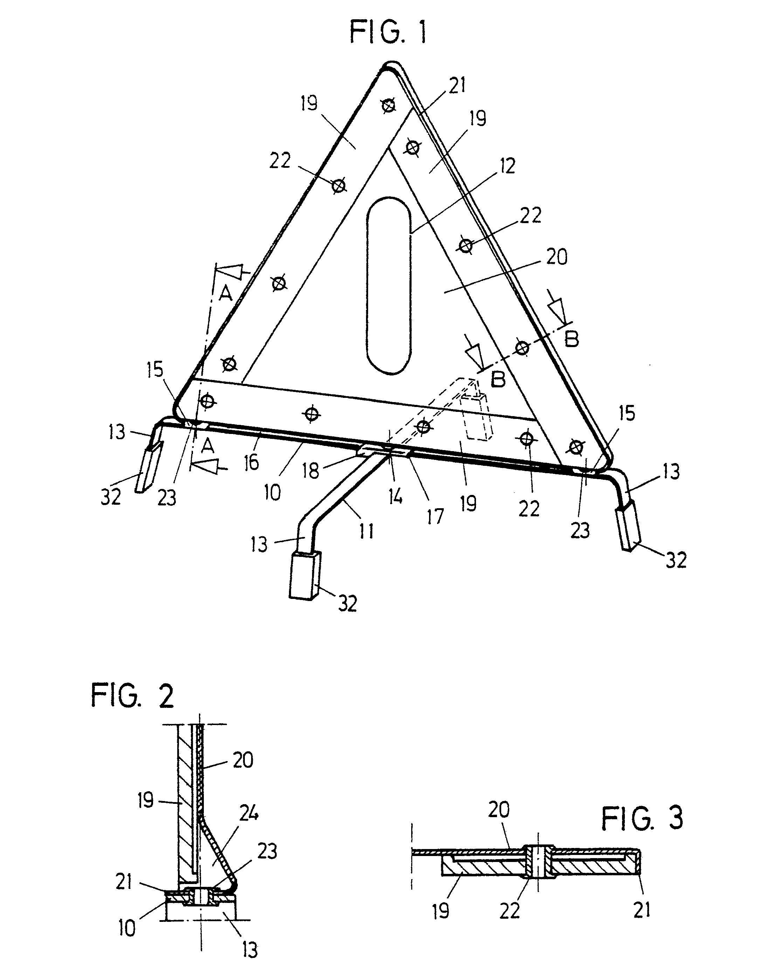

Wenn man von den beiden einen kreuzförmigen Ständer bildenden Flachstäben 10 und 11 einmal absieht, dann erscheint einem das in Fig. 1 der Zeichnung dargestellte Warndreieck als verkleinerte Nachbildung der bei der Beschilderung gefährlicher Stellen nach der Anlage der Strassenverkehrs-Ordnung vorgeschriebenen Warnungstafeln, die einen roten Rand aufweisen und durch schwarze Zeichen auf weissem Grund die Art der Warnung angeben. In Fig. 1 der Zeichnung ist als Zeichen 12 dasjenige für die allgemeine Gefahrenstelle in Form eines senkrechten Balkens zu sehen, und zwar lediglich in seiner Kontur, um eine grosse schwarze Fläche in der Zeichnung zu vermeiden. An dieser Stelle sei klargestellt, dass beim hier näher zu erläuternden Gegenstand der Erfindung der Aussagegehalt des Zeichens 12 letztlich unerheblich ist. Vielmehr geht es um eine besondere Bauform des Zeichenträgers.

Die beiden Flachstäbe 10 und 11 mit ihren zu je einem Standfuss 13 abgewinkelten Enden bestehen aus dünnem Federstahl. Durch eine nach aussen weisende leichte Spreizstellung und eine Übergangskrümmung können die Standfüsse 13 wirksamer an der Abfederung der Windkräfte teilhaben. Das in der Mitte des ersten Flachstabes 10 befindliche Schwenklager 14 für den zweiten Flachstab 11 wird von einer Hohlniete grossen Durchmessers gebildet. Seitlich davon ist bis in die Nähe der Befestigungsstelle 15 im Endbereich der unteren Seite des Warndreiecks zwischen dem Warndreieck und dem ersten Flachstab 10 ein Luftspalt 16 für Torsionsbewegungen der jeweiligen Hälfte des ersten Flachstabs 10 vorgesehen. Dadurch, dass auf den ersten Flachstab 10 ein ihn an den Schmalseiten umgreifendes U-Schienenstück 17 aufgesetzt ist und der die Ausschwenk-Endstellung des zweiten Flachstabes 11 begrenzende Anschlag 18 aus einem tiefer hinunterreichenden Schenkelabschnitt des U-Schienenstücks 17 besteht, wird eine Eigengewicht und Herstellungskosten einsparende Bauform des im Kraftfahrzeug mitnehmbaren Warndreiecks weiter gefördert. Das U-Schienenstück 17 verbessert zugleich die Kraftübertragung beim Übergang von den Torsionsbewegungen der Hälften des ersten Flachstabes 10 auf die Blattfederbewegung der Hälften des zweiten Flachstabes 11.

Bei dem in der Zeichnung dargestellten Ausführungsbeispiel der Erfindung wird speziell von einem im Kraftfahrzeug mitnehmbaren Warndreieck ausgegangen, bei dem rückstrahlende Randleisten 19 auf einer dreieckigen Verkehrszeichentafel 20 befestigt sind. Dieses Warndreieck weist nun die Besonderheit auf, dass die Verkehrszeichentafel 20 mit einem rundum in Signalrichtung hochgestellten Rand 21 versehen ist, wobei die Tiefe der in der Verkehrszeichentafel 20 gebildeten Pfanne die Dicke der rückstrahlenden Randleisten 19 zumindest erreicht. Damit wird eine weitere Gewichtseinsparungen zulassende Versteifung der Verkehrszeichentafel 20 erzielt und zugleich ein Kantenschutz für die rückstrahlenden Randleisten 19 geschaffen. Die drei abmessungsgleichen rückstrahlenden Randleisten 19 sind mit der Verkehrszeichentafel 20 jeweils durch mehrere Hohlnieten 22 verbunden.

Um bei dem im Kraftfahrzeug mitnehmbaren Warndreieck ein Eigenkippmoment zu vermeiden und damit ein Stehenbleiben bei voll eingeschwenktem zweiten Flachstab 11 zu ermöglichen, ist in der Verkehrszeichentafel 20 an den beiden Befestigungsstellen 15 zwischen der Verkehrszeichentafel 20 und dem ersten Flachstab 10 jeweils eine dem Kopf 23 einer Befestigungsschraube oder Befestigungsniete innen auf dem hochgestellten Rand 21 der Verkehrszeichentafel 20 ausreichend Platz bietende Tasche 24 eingeprägt und der unter dem hochgestellten Rand 21 ausserhalb der Taschen 24 verbleibende Hauptteil der Verkehrszeichentafel 20 sich in seiner senkrechten Normalstellung in der Ebene der Längsmittellinie des ersten Flachstabes 10 erstreckend angeordnet. Dieser Sachverhalt ist in der vergrösserten Detailwiedergabe der Fig. 2 veranschaulicht.

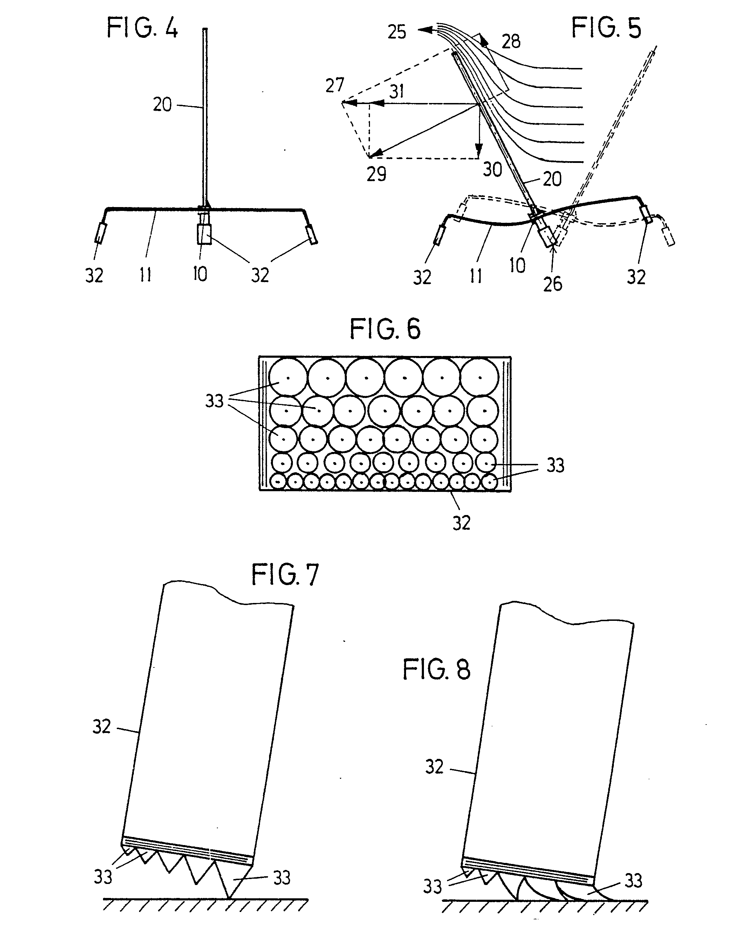

In Fig. 5 der Zeichnung ist mit Rückblick auf Fig. 4 und schematisch etwas übertrieben das Verhalten des Warndreiecks bei breitseitig aufgenommenem Wind dargestellt. Die Windströmung 25 wird an der Verkehrszeichentafel 20 gestaut und überwiegend ein Stück nach oben abgelenkt. Dabei gibt die Verkehrszeichentafel 20 federnd nach, indem sie um eine gedachte Kippachse 26 schwenkend, die die Unterseitenmitten der beiden Standfüsse 13 des ersten Flachstabes 10 durchläuft, eine Schräglage einnimmt. Die ursächliche horizontale Windkraft 27 lässt sich gemäss dem in Fig. 5 eingezeichneten Kräftediagramm in eine zur Verkehrszeichentafel 20 parallele Strömungskomponente 28 und eine zur Verkehrszeichentafel 20 senkrechte Kippkomponente 29 aufteilen und die Kippkomponente 29 wiederum in eine gegen den Erdboden gerichtete Andruckkomponente 30 und eine zum Erdboden parallele Schubkomponente 31. Die Andruckkomponente 30 gelangt überwiegend zu demjenigen der vier Standfüsse 13, dem sich die Verkehrszeichentafel 20 zuneigt, wobei das untersetzende Kraftarm-Lastarm-Verhältnis der betreffenden Hälfte des zweiten Flachstabes 11 annähernd durch das übersetzende Kraftarm-Lastarm-Verhältnis der Verkehrszeichentafel 20 ausgeglichen wird. Die mit zunehmender Schrägstellung der Verkehrszeichentafel 20 anwachsenden Rückstellkräfte äussern sich in einer Verwindung des ersten Flachstabes 10 zwischen dem Schwenklager 14 in dessen Mitte und den beiden aussenliegenden Befestigungsstellen 15 und in einer Durchbiegung des zweiten Flachstabes 11. Dabei wird der dem Wind 25 zugewandte zweite Standfuss 13 des zweiten Flachstabes 11 entlastet und bei einer grösseren Schrägstellung der Verkehrszeichentafel 20 sogar vom Erdboden abgehoben, so dass sich die vom Eigengewicht des im Kraftfahrzeug mitnehmbaren Warndreiecks herrührende Grundandruckkraft nur noch auf drei Standfüsse 13 verteilt.

In Fig. 5 der Zeichnung ist zusätzlich mit gestrichelten Linien die Verformung des Warndreiecks nach der anderen Seite dargestellt, die eintritt, wenn ein Windstoss 25 derselben Stärke aus der entgegengesetzten Richtung kommt. Dadurch wird deutlich, dass die Standfüsse 13 des ersten Flachstabes 10 dazu tendieren, eine Abrollbewegung auszuführen, und die Standfüsse 13 des zweiten Flachstabes 11 dazu tendieren, eine Gleitbewegung auszuführen. Aus diesem Grunde ist bei dem Warndreieck, bei dem in üblicher Weise auf die abgewinkelten Enden der beiden Flachstäbe 10 und 11 Schuhe 32 aus rutschhemmendem Material aufgesteckt sind, die an der Unterseite elastische Ausformungen 33 aufweisen, dafür gesorgt, dass die Ausformungen 33 der Schuhe 32 des zweiten Flachstabes 11 in der vom Warndreieck fortweisenden Richtung mit reihenweise abnehmender Höhe und reihenweise zunehmender Anzahl aufeinanderfolgen. Ergänzend dazu sind die Schuhe 32 des ersten Flachstabes 10 quer zur Ebene des Warndreiecks beiderseits abgerundet oder abgeschrägt. Aus den Fig. 6 bis 8 der Zeichnung ist zu ersehen, wie sich diese Besonderheiten an einem für beide Flachstäbe 10 und 11 einheitlichen Standfuss-Schuh 32 verwirklichen lassen.

In unbelastetem Zustand haben die elastischen Ausformungen 33 der Standfuss-Schuhe 32 jeweils die Form eines senkrechten Kreiskegels. Sobald die Verkehrszeichentafel 20 aufgrund einer Windströmung 25 eine Schrägstellung erhält, wird an dem Standfuss-Schuh 32, dem sich die Verkehrszeichentafel 20 zuneigt, bewirkt, dass sich die elastischen Ausformungen 33 mit der innersten Reihe der grössten Ausformungen 33 beginnend in steigender Zahl zunehmend umbiegen und mit einem zunehmenden Teil ihrer Mantelfläche an den Erdboden anlegen. Dabei geraten die kleineren Ausformungen 33 in die Zwischenräume der jeweils benachbarten grösseren Ausformungen 33 mit der Folge eines pinselartigen Auseinanderquetschens. Auf diese Weise wird unter zunehmender Kontaktfläche zum Erdboden dem Standfuss-Schuh 32 die Möglichkeit einer rutschfreien reversiblen Ausgleichsbewegung beim Durchfedern des zweiten Flachstabes 11 geboten, wobei die betroffenen Ausformungen 33 ihrerseits Rückstellkräfte aufbringen und die jeweils nachfolgende Reihe kleinerer Ausformungen 33 sich mit den Kreiskegelspitzen in den Erdboden eindrückt.

## Patentansprüche

1. Im Kraftfahrzeug mitnehmbares Warndreieck für die Sicherung des Strassenverkehrs gegenüber haltenden oder liegengebliebenen Fahrzeugen, das in den Endbereichen einer seiner drei gleich langen Seiten mit der Spitze nach oben ragend auf einem Flachstab (10) befestigt ist, dessen Enden zu einem Standfusspaar (13) nach unten abgewinkelt sind, und zu seiner Abstützung mit einem zweiten Flachstab (11) mit zu einem Standfusspaar (13) nach unten abgewinkelten Enden versehen ist, der am ersten Flachstab drehbar gelagert ist, in der Einschwenk-Endstellung unter dem ersten Flachstab Platz hat und in der durch einen Anschlag (18) begrenzten Ausschwenk-Endstellung mit dem ersten Flachstab (10) einen kreuzförmigen Ständer bildet, dadurch gekennzeichnet, dass die beiden Flachstäbe (10, 11) unstarr dünn und elastisch ausgebildet sind, die Hälften des ersten Flachstabs (10) zwischen dem Schwenklager (14) für den zweiten Flachstab (11) und der jeweiligen Befestigungsstelle (15) für das Warndreieck als Torsionsfedern eingerichtet sind und die Hälften des zweiten Flachstabes (11) als vom Warndreieck breitseitig aufgenommenen Wind ausgeschwenkt in Standfuss-Andruckkraft umsetzende Blattfedern eingerichtet sind.

2. Warndreieck nach Anspruch 1, dadurch gekennzeichnet, dass auf den ersten Flachstab (10) ein ihn an den Schmalseiten umgreifendes U-Schienenstück (17) aufgesetzt ist und der die Ausschwenk-Endstellung des zweiten Flachstabes (11) begrenzende Anschlag (18) aus einem tiefer hinunterreichenden Schenkelabschnitt des U-Schienenstücks (17) besteht.

3. Warndreieck nach Anspruch 1 oder 2, bei dem auf die abgewinkelten Enden der beiden Flachstäbe Schuhe (32) aus rutschhemmendem Material aufgesteckt sind, die an der Unterseite elastische Ausformungen (33) aufweisen, dadurch gekennzeichnet, dass die Ausformungen (33) der Schuhe (32) des zweiten Flachstabes

(11) in der vom Warndreieck fortweisenden Richtung mit reihenweise abnehmender Höhe und reihenweise zunehmender Anzahl aufeinanderfolgen.

4. Warndreieck nach Anspruch 3, dadurch gekennzeichnet, dass die Schuhe (32) des ersten Flachstabes (10) quer zur Ebene des Warndreiecks beiderseits abgerundet oder abgeschrägt sind.

5. Warndreieck nach einem der Ansprüche 1 bis 4, bei dem rückstrahlende Randleisten (19) auf einer dreieckigen Verkehrszeichentafel (20) befestigt sind, dadurch gekennzeichnet, dass die Verkehrszeichentafel (20) mit einem rundum in Signalrichtung hochgestellten Rand (21) versehen ist, wobei die Tiefe der in der Verkehrszeichentafel (20) gebildeten Pfanne die Dicke der rückstrahlenden Randleisten (19) zumindest erreicht.

6. Warndreieck nach Anspruch 5, dadurch gekennzeichnet, dass in der Verkehrszeichentafel (20) an den beiden Befestigungsstellen (15) zwischen der Verkehrszeichentafel (20) und dem ersten Flachstab (10) jeweils eine dem Kopf (23) einer Befestigungsschraube oder Befestigungsniete innen auf dem hochgestellten Rand (21) der Verkehrszeichentafel (20) ausreichend Platz bietende Tasche (24) eingeprägt ist und der unter dem hochgestellten Rand (21) ausserhalb der Taschen (24) verbleibende Hauptteil der Verkehrszeichentafel (20) sich in seiner senkrechten Normalstellung in der Ebene der Längsmittellinie des ersten Flachstabes (10) erstreckend angeordnet ist.

## Revendications

1. Triangle de signalisation pouvant être emporté dans un véhicule automobile et destiné à assurer la sécurité du trafic routier dans le cas de véhicules automobiles à l'arrêt ou en panne, qui, dans les régions d'extrémité de l'un de ses trois grands côtés égaux, est fixé, sommet pointant vers le haut, à une barre plate (10) dont les extrémités sont coudées vers le bas en une paire de pieds d'assise et qui, pour son appui, est muni d'une seconde barre plate (1) montée pivotante sur la première barre plate, prenant place, dans la position d'extrémité rentrée, sous la première barre plate et formant, dans la position d'extrémité sortie délimitée par une butée (18), avec la première barre plate (10), un support en forme de croisillon, caractérisé en ce que les deux barres plates (10, 11) sont constituées en étant souples, minces et élastiques, les moitiés de la première barre plate (10) sont agencées en ressorts de torsion entre le palier de pivotement (14) pour la seconde barre plate (11) et l'emplacement de fixation (15) du triangle de signalisation, et les moitiés de la seconde barre plate (11) sont montées en ressorts à la lame transformant, en position déployée en force d'application du pied d'assise, le vent reçu par la partie large du triangle.

2. Triangle de signalisation selon la revendication 1, caractérisé en ce qu'une pièce de rail en U (17) est posée sur la première barre plate (10) en entourant les petits côtés et la butée (18) délimitant la position d'extrémité déployée de la seconde barre plate (11) est constituée d'un tronçon d'aile, allant davantage vers le bas, de la pièce de rail en U (17).

3. Triangle de signalisation selon la revendication 1 ou 2, dans lequel sur les extrémités coudées des deux barres plates sont enfilés des sabots (32) en un matériau freinant le glissement, qui présentent des soies (33) élastiques sur le côté inférieur, caractérisé en ce que les soies (33) des sabots (32) de la seconde barre plate (11) se succèdent, dans le sens s'éloignant du triangle de signalisation, en ayant des hauteurs décroissantes par rangée et en nombre croissant par rangée.

4. Triangle de signalisation selon la revendication 3, caractérisé en ce que les sabots (32) de la première barre plate (10) sont arrondis ou sont biseautés des deux côtés transversalement au plan du triangle de signalisation.

5. Triangle selon l'une des revendications 1 à 4, dans lequel des baguettes marginales (19) réfléchissantes sont fixées sur un panneau triangulaire (20) de signalisation, caractérisé en ce que le panneau (20) de signalisation est muni d'un bord relevé (21) tout autour dans la direction de signalisation, la profondeur de la cuvette formée dans le panneau de signalisation étant au moins égale à l'épaisseur des baguettes marginales (19) réfléchissantes.

6. Triangle de signalisation selon la revendication 2 ou 5, caractérisé en ce que, dans le panneau de signalisation (20) sont estampées, aux deux emplacements de fixation (15) entre le panneau de signalisation (20) et la première barre plate (10), des poches (24) ménageant suffisamment de place à la tête (23) d'une vis de fixation ou d'un rivet de fixation à l'intérieur sur le bord relevé (21) du panneau de signalisation (20) et la partie principale du panneau de signalisation (20), qui reste en dehors des poches (24) sous le bord relevé (21), s'étend quand elle est en sa position normale verticale, dans le plan de la ligne médiane longitudinale de la première barre plate (10).

## Claims

1. A warning triangle capable of being carried in a motor vehicle for use in protecting road traffic against stopping or stationary vehicles, which when oriented point upwards is fixed in the end regions of one of its three equal length sides to a flat bar (10) with ends bent downwards to form a pair of supporting feet (13) and which is provided for support purposes with a second flat bar (11) with ends bent downwards to form a pair of supporting feet (13) and rotatably mounted on the first flat bar, the second bar in its inwardly pivoted end position being accommodated under the first flat bar and in the outwardly pivoted end position limited by a stop (18) forming with the first flat bar (10) a cross shaped stand, characterised in that the two flat bars (10, 11) are non-rigidly thin and resilient in construction, the halves of the first flat bar (10) between the pivot point (14) for the second flat bar (11) and the respective fixing points (15) for the warning triangle being arranged as torsion springs and the halves of the second flat bar (11) being arranged as leaf springs for converting wind acting on the face of and deflecting the warning triangle into pressure on the supporting feet.

2. Warning triangle according to claim 1, characterised in that a U-section rail element is mounted on the first flat bar (1) and grips it a the narrow edges and the stop (18) defining the outer end position of the second flat bar (11) is a more deeply depending limb section of the rail element (17).

3. Warning triangle according to claim 1 or 2, in which shoes (32) of slide-resistant material are located on the angled ends of the two flat bars and have resilient projections (33) on their undersides, characterised in that the projections (33) of the shoes (32) of the second flat bar (11) as considered in the direction fordwardly of the warning triangle are arranged in rows of decreasing height and increasing number.

4. Warning triangle according to claim 3, characterised in that the shoes (32) of the first flat bar (10) are rounded or bevelled at both sides transverse to the plane of the warning triangle.

5. Warning triangle according to one of claims 1 to 4, in which the reflective edge strips (19) are fixed to a triangular traffic signal panel (20), characterised in that the traffic signal panel (20) is provided with a peripheral rim (21) projecting in the signal direction, whereby the depth of the dish formed in the traffic signal panel (20) is at least equal to the thickness of the reflective edge strips (19).

6. Warning triangle according to claim 5, characterised in that in the traffic signal panel (20) at the two fixing points (15) between the traffic signal panel (20) and the first flat bar (10) is impressed a pocket (24) affording sufficient space for the head (23) of a fixing screw or rivet on the inside of the projecting rim (21) of the traffic signal panel (20), and the main portion of the traffic signal panel (20) under the projecting rim (21) outside the pocket (24) is arranged in the normal vertical position to extend in the plane of the longitudinal centre line of the first flat bar (10).

FIG. 1

FIG. 2

FIG. 3

# FIG. 4

# FIG. 5

# FIG. 6

# FIG. 7

# FIG. 8